# FASCICULE DE BREVET EUROPEEN

(11) **EP 4 295 025 B1**
(45) Date de publication et mention de la délivrance du brevet: **29.01.2025**
(21) Numéro de dépôt: 22708989.3
(22) Date de dépôt: 14.02.2022
(51) Int. Cl.: F02K 1/12

(54) **PARTIE ARRIÈRE DE TURBOREACTEUR COMPRENANT UNE TUYÈRE À LOI A9/A8 ÉTENDUE**
HINTERER TEIL EINES TURBOSTRAHLTRIEBWERKS MIT ERWEITERTEM A9/A8-DÜSENFLÄCHENVERHÄLTNIS
TURBOJET ENGINE REAR PORTION HAVING AN AUGMENTED A9/A8 NOZZLE AREA RATIO

(30) Priorité: 18.02.2021 FR 2101523
(43) Date de publication de la demande: 27.12.2023
(73) Titulaire: SAFRAN AIRCRAFT ENGINES, 75015 Paris (FR)
(72) Inventeur: KOHN, Thierry, 77550 MOISSY-CRAMAYEL (FR); KRAJKA, Dimitri, Thomas, 77550 MOISSY-CRAMAYEL (FR)
(74) Mandataire: Brevalex
(86) Numéro de dépôt international: PCT/FR2022/050262
(87) Numéro de publication internationale: WO 2022/175620

(56) Documents cités:
- EP-A1- 0 814 253
- EP-A2- 0 833 047
- US-A- 2 995 010

## Description

### DOMAINE TECHNIQUE

La présente invention se rapporte au domaine des tuyères à géométrie variable des turboréacteurs destinés à la propulsion des aéronefs.

### ÉTAT DE LA TECHNIQUE ANTÉRIEURE

Les turboréacteurs destinés au vol supersonique comprennent en général un canal de postcombustion dont la sortie est délimitée par une tuyère axisymétrique à géométrie variable, c'est-à-dire capable d'adapter sa géométrie aux différentes vitesses auxquelles est susceptible de voler un tel aéronef.

À cet effet, une telle tuyère comprend au moins un ensemble de volets internes mobiles, dits volets convergents, répartis autour de l'axe longitudinal du turboréacteur et ayant chacun une extrémité amont articulée sur une structure interne du carter, chacun des volets convergents comprenant un panneau destiné à canaliser le flux de gaz d'échappement au sein de la tuyère. Une telle tuyère comprend en outre un système de commande des volets convergents apte à entraîner un pivotement de ces derniers autour de leurs axes d'articulation au carter de manière synchronisée.

Bien souvent, les tuyères destinées au vol supersonique comprennent en outre un autre ensemble de volets internes mobiles, dits volets divergents, répartis autour de l'axe longitudinal, comprenant chacun un panneau destiné à canaliser le flux de gaz d'échappement au sein de la tuyère, et ayant des extrémités amont respectives articulées sur des extrémités aval des volets convergents, moyennant quoi une telle tuyère est appelée tuyère convergente-divergente.

Dans ce cas, le système de commande est en outre configuré pour asservir les positions des volets divergents à celles des volets convergents. Un tel système permet ainsi de faire varier de façon continue les inclinaisons respectives des volets convergents par rapport à l'axe longitudinal du turboréacteur, et d'y faire correspondre des inclinaisons des volets divergents, par rapport à cet axe, suivant une loi univoque déterminée. Une telle tuyère permet ainsi notamment de faire varier la position et la forme du col de la tuyère.

Il est à noter que le qualificatif « divergent » n'exclut pas que les volets concernés puissent adopter des orientations parallèles à l'axe longitudinal ou même convergentes dans certaines phases de fonctionnement.

Les documents EP0833047A2 et EP0814253A1 divulguent des exemples de tuyères à géométrie variable connues.

Un paramètre important pour le fonctionnement de telles tuyères est le rapport A9/A8, dans lequel A8 désigne la section de la tuyère au niveau du col formé à la jonction entre les volets convergents et les volets divergents, tandis que A9 désigne la section de la tuyère au niveau de l'extrémité aval des volets divergents.

La plage dans laquelle varie ce rapport A9/A8, pour une tuyère donnée, dépend de la configuration des moyens mis en oeuvre pour asservir les positions des volets divergents à celles des volets convergents.

Dans ce contexte, il existe un besoin pour une tuyère à géométrie variable dont le système de commande des volets internes mobiles soit efficace et peu encombrant afin de permettre son intégration dans un espace limité, tout en permettant de maximiser la plage de valeurs possibles pour le rapport A9/A8.

### EXPOSÉ DE L'INVENTION

L'invention a notamment pour but de répondre de manière simple, économique et efficace à ce besoin.

Selon la revendication 1, l'invention propose à cet effet une partie arrière de turboréacteur, comprenant :
- une structure statorique amont ;
- une tuyère convergente-divergente à géométrie variable comprenant un ensemble de volets convergents répartis autour d'un axe longitudinal de la partie arrière de turboréacteur, comprenant chacun un panneau destiné à canaliser un flux de gaz d'échappement au sein de la tuyère, et ayant chacun une extrémité amont articulée sur la structure statorique amont, et comprenant en outre un ensemble de volets divergents répartis autour de l'axe longitudinal, comprenant chacun un panneau destiné à canaliser le flux de gaz d'échappement au sein de la tuyère, et ayant chacun une extrémité amont articulée sur une extrémité aval d'un volet convergent correspondant ;
- un anneau de synchronisation agencé autour de l'ensemble de volets convergents ou de la structure statorique amont ;
- des moyens moteurs configurés pour déplacer l'anneau de synchronisation en translation selon l'axe longitudinal, par rapport à la structure statorique amont ;
- des moyens d'actionnement par lesquels l'anneau de synchronisation agit sur certains au moins des volets convergents, dits volets convergents commandés, pour commander une variation géométrique de la tuyère ; et
- des moyens pour asservir les positions des volets divergents à celles des volets convergents, comprenant une première bielle ayant une première partie d'extrémité articulée au volet convergent correspondant et une seconde partie d'extrémité opposée, une deuxième bielle ayant une première partie d'extrémité articulée au volet divergent correspondant et une seconde partie d'extrémité opposée, et une troisième bielle ayant une première partie d'extrémité articulée à l'anneau de synchronisation et une seconde partie d'extrémité opposée ;

dans laquelle la seconde partie d'extrémité de la première bielle est articulée à au moins l'une parmi la seconde partie d'extrémité de la deuxième bielle et la seconde partie d'extrémité de la troisième bielle, et
la seconde partie d'extrémité de la troisième bielle est articulée à la seconde partie d'extrémité de la deuxième bielle.

De ce fait, les moyens mis en oeuvre pour la commande des volets peuvent présenter un encombrement et une masse limités au mieux, tout en autorisant une plage de valeur étendue pour le rapport A9/A8.

Dans des modes de réalisation préférés de l'invention, la seconde partie d'extrémité de la première bielle est articulée conjointement à la seconde partie d'extrémité de la deuxième bielle et à la seconde partie d'extrémité de la troisième bielle, selon un axe d'articulation commun.

Dans d'autres modes de réalisation préférés de l'invention, la seconde partie d'extrémité de la troisième bielle est articulée à la seconde partie d'extrémité de la deuxième bielle selon un cinquième axe d'articulation, et la seconde partie d'extrémité de la première bielle est articulée à la seconde partie d'extrémité de la deuxième bielle selon un sixième axe d'articulation situé entre le cinquième axe d'articulation et la première partie d'extrémité de la deuxième bielle.

De préférence, un rapport A9/A8, égal au quotient d'une section A9 de la tuyère au niveau d'une extrémité aval des volets divergents par une section A8 de la tuyère au niveau d'un col formé à une jonction entre les volets convergents et les volets divergents, varie dans une plage d'étendue supérieure à 0,35.

L'invention concerne également un turboréacteur pour aéronef, comprenant une partie arrière du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une demi-vue schématique en section axiale d'un turboréacteur comprenant une tuyère à géométrie variable ;
- la figure 2 est une demi-vue schématique en section axiale d'une partie arrière de turboréacteur d'un type connu ;
- la figure 3 est une demi-vue schématique en section axiale d'une partie arrière du turboréacteur de la figure 1, selon un mode de réalisation de l'invention, dans une configuration de faible convergence des volets convergents ;
- la figure 4 est une demi-vue schématique en section axiale de la partie arrière du turboréacteur de la figure 1, dans une configuration de forte convergence des volets convergents ;
- la figure 5 est une vue schématique en perspective de certains éléments composant la partie arrière du turboréacteur de la figure 1, destinés à la commande des volets convergents ;
- les figures 6 et 7 sont des vues schématiques en perspective à plus grande échelle d'une partie des éléments visibles sur la figure 5.
- la figure 8 est une vue schématique partielle en perspective d'une partie arrière de turboréacteur selon une variante de réalisation, illustrant des éléments destinés à l'asservissement des volets divergents de la tuyère.

Dans l'ensemble de ces figures, des références identiques peuvent désigner des éléments identiques ou analogues.

### EXPOSÉ DÉTAILLÉ DE MODES DE RÉALISATION PRÉFÉRÉS

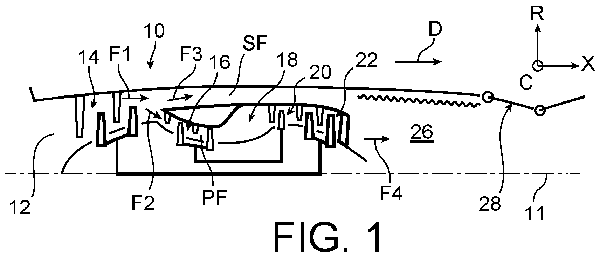

La figure 1 illustre un turboréacteur 10, par exemple à double corps et à double flux, destiné à la propulsion d'un aéronef apte au vol supersonique, et donc destiné en particulier à être installé dans le fuselage d'un tel aéronef. L'invention est bien entendu applicable à d'autres types de turboréacteurs.

Dans l'ensemble de cette description, la direction axiale X est la direction de l'axe longitudinal 11 du turboréacteur. Sauf lorsqu'il en est stipulé autrement, la direction radiale R est en tout point une direction orthogonale à l'axe longitudinal 11 et passant par ce dernier, et la direction circonférentielle C est en tout point une direction orthogonale à la direction radiale R et à l'axe longitudinal 11. Sauf lorsqu'il en est stipulé autrement, les termes « interne » et « externe » font respectivement référence à une relative proximité, et un relatif éloignement, d'un élément par rapport à l'axe longitudinal 11. Enfin, les qualificatifs « amont » et « aval » sont définis par référence à une direction générale D de l'écoulement des gaz dans le turboréacteur 10.

À titre illustratif, un tel turboréacteur 10 comprend, de l'amont vers l'aval, une entrée d'air 12, un compresseur basse pression 14, un compresseur haute pression 16, une chambre de combustion 18, une turbine haute pression 20, une turbine basse pression 22, un canal de postcombustion 26, et une tuyère 28 à géométrie variable, par exemple de type convergente-divergente. Ces organes du turboréacteur sont tous centrés selon l'axe longitudinal 11 du turboréacteur.

De manière bien connue, le compresseur haute pression 16, la chambre de combustion 18, et les turbines haute pression 20 et basse pression 22, définissent une veine primaire PF. Cette dernière est entourée par une veine secondaire SF de la turbomachine qui s'étend de l'amont vers l'aval à partir d'une sortie du compresseur basse pression. Ainsi, en fonctionnement, de l'air F1 qui est entré par l'entrée d'air 12 et qui a été comprimé par le compresseur basse pression 14, se divise ensuite en un flux primaire F2 qui circule dans la veine primaire et en un flux secondaire F3 qui circule dans la veine secondaire. Le flux primaire F2 est alors comprimé davantage dans le compresseur haute pression 16, puis mélangé à du carburant et enflammé dans la chambre de combustion 18, avant de subir une détente dans la turbine haute pression 20 puis dans la turbine basse pression 22.

Le flux de gaz d'échappement F4, constitué par le mélange des gaz de combustion, issus de la veine primaire, et du flux secondaire F3, circule ensuite dans le canal de postcombustion 26, puis s'échappe du turboréacteur 10 au travers de la tuyère 28.

En régime de fonctionnement avec postcombustion, par exemple pour propulser un aéronef à des vitesses supersoniques, du carburant est mélangé au flux de gaz d'échappement F4 au sein du canal de postcombustion 26, et le mélange ainsi constitué est enflammé au sein de ce canal de postcombustion, afin de générer un surcroît de poussée.

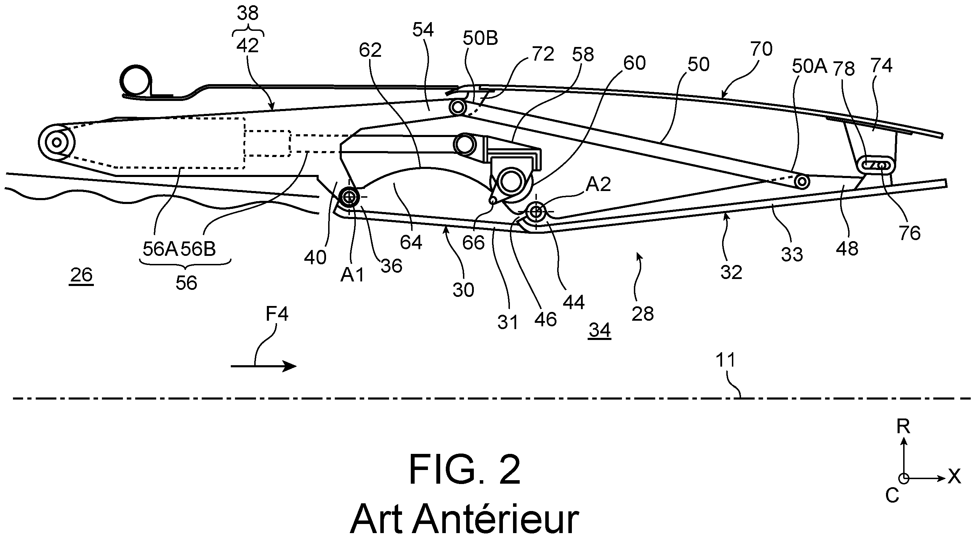

La figure 2 illustre à plus grande échelle une partie arrière de turboréacteur dans une configuration connue de l'art antérieur, et permet notamment d'apercevoir des volets internes mobiles de la tuyère.

Les volets internes mobiles se composent, en amont, d'un ensemble de volets convergents 30 répartis autour de l'axe longitudinal 11, et, en aval, d'un ensemble de volets divergents 32 répartis aussi autour de l'axe longitudinal 11.

Ces volets internes mobiles comportent chacun un panneau 31, 33 contribuant à délimiter extérieurement un canal de circulation de gaz d'échappement 34 défini dans le prolongement du canal de postcombustion 26. Les volets internes mobiles 30, 32 permettent ainsi de canaliser le flux de gaz d'échappement F4 en sortie du turboréacteur 10, en fonctionnement.

Les volets convergents 30 sont articulés à leurs extrémités amont 36 sur une structure statorique 38 de la partie arrière de turboréacteur, en l'occurrence sur des chapes internes 40 de poutrelles 42 appartenant à ladite structure statorique, de sorte que les volets convergents 30 soient déplaçables en rotation autour de premiers axes d'articulation A1 assujettis à la structure statorique 38.

Les volets divergents 32 sont articulés, à leurs extrémités amont 44, sur des extrémités aval 46 des volets convergents 30, de sorte que les volets divergents 32 soient déplaçables en rotation autour de deuxièmes axes d'articulation A2 assujettis aux volets convergents 30 et généralement parallèles aux premiers axes A1. Les volets divergents 32 sont en outre articulés, à leurs extrémités aval 48, sur des premières extrémités 50A de bielles 50 ayant des secondes extrémités 50B opposées articulées sur la structure statorique 38, en l'occurrence sur des chapes externes 54 des poutrelles 42.

Un système de commande des volets internes mobiles comporte des moyens moteurs configurés pour agir sur certains au moins des volets convergents, qui seront dénommés volets convergents commandés dans ce qui suit. Dans le cas où d'autres volets convergents ne sont soumis à l'action des moyens moteurs que par l'intermédiaire des volets convergents commandés, ces autres volets convergents sont dénommés volets convergents suiveurs, d'une manière bien connue.

Les moyens moteurs sont typiquement constitués de vérins 56 ayant chacun une partie statique, par exemple leur corps 56A, fixée à la structure statorique 38, et une partie mobile, par exemple leur tige 56B, solidaire d'un porte-galet 58 correspondant, sur lequel est monté un galet 60 en appui roulant sur une came 62 formée par une structure 64 solidaire du panneau 31 d'un volet convergent 30 correspondant, le porte-galet 58 étant en outre solidaire d'un doigt de retenue 66 coopérant avec la structure 64 pour retenir radialement le volet convergent 30 et éviter en particulier que le volet ne s'abaisse sous l'effet de la gravité lorsque le turboréacteur est à l'arrêt. L'ensemble des volets internes mobiles 30 et 32 forme ainsi, avec la structure statorique 38, un système isostatique.

Un déplacement en translation de la partie mobile de chaque vérin 56 permet ainsi de provoquer un déplacement des volets convergents 30 en rotation autour des premiers axes d'articulation A1, qui s'accompagne d'un déplacement des volets divergents 32 en rotation autour des deuxièmes axes d'articulation A2, au cours duquel la course des volets divergents est déterminée par les bielles 50. De tels déplacements des volets internes mobiles 30, 32 conduisent à modifier le profil de la tuyère et notamment la section du col de celle-ci au niveau de la jonction entre les volets convergents et les volets divergents.

La tuyère comporte en outre des volets externes mobiles 70 ayant des extrémités amont 72 articulées sur la structure statorique 38, par exemple sur les chapes externes 54 des poutrelles 42, et des extrémités aval 74 assujetties aux extrémités aval 48 des volets divergents 32, par exemple au moyen de dispositifs de liaison à galet 76 et glissière 78.

La configuration à géométrie variable de la tuyère 28 permet d'adapter cette dernière aux différentes phases de vol. Ainsi, en régime subsonique, les volets internes convergents sont par exemple maintenus dans une configuration faiblement convergente, tandis qu'en régime supersonique, les volets internes convergents adoptent une configuration davantage convergente.

Un paramètre important pour le fonctionnement d'une telle tuyère est le rapport A9/A8, dans lequel A8 désigne la section de la tuyère au niveau du col 79A formé à la jonction entre les volets convergents 30 et les volets divergents 32, tandis que A9 désigne la section de la tuyère au niveau de l'extrémité aval 79B des volets divergents 32. Un tel rapport A9/A8 présente en général une valeur comprise entre 1,1 et 1,8.

La plage de valeurs dans laquelle varie le rapport A9/A8, pour une tuyère donnée, dépend de la configuration des moyens mis en oeuvre pour asservir les positions des volets divergents 32 à celles des volets convergents 30. Dans l'exemple décrit ci-dessus, cette plage est ainsi déterminée par les caractéristiques des bielles 50 et par le mode de liaison de ces dernières aux volets divergents 32 et à la structure statorique 38, et présente typiquement une étendue de 0,15.

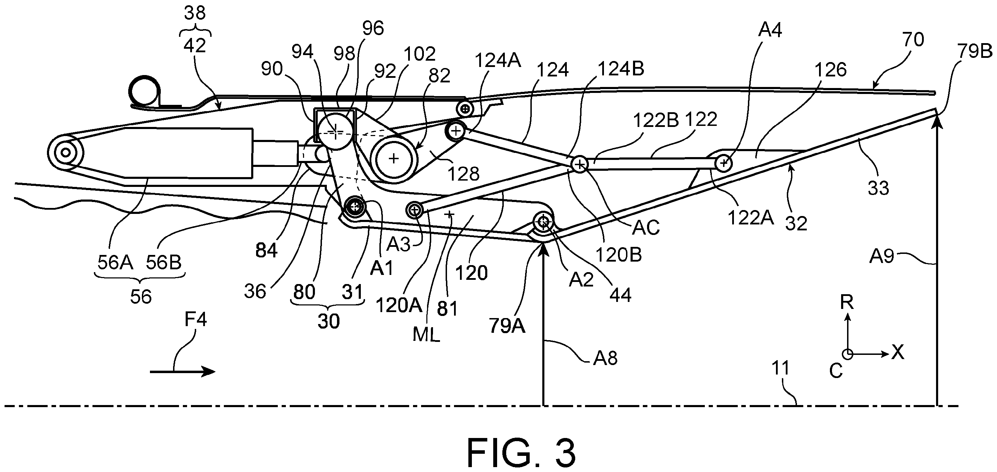

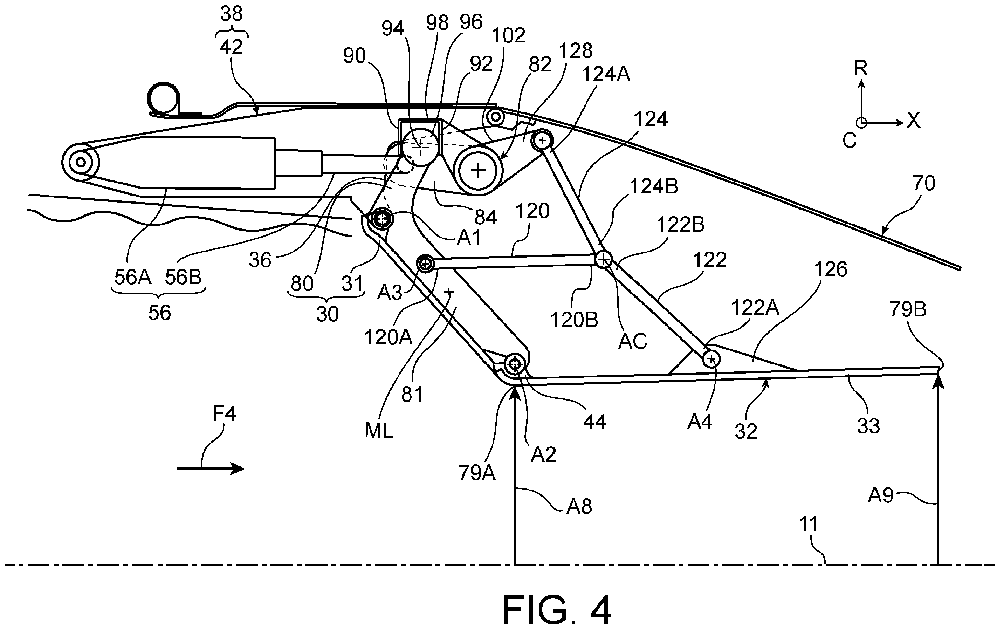

La partie arrière du turboréacteur de la figure 1, selon un mode de réalisation de l'invention, qui va maintenant être décrite plus en détail en référence aux figures 3 à 7, vise à obtenir une plage de valeurs plus étendue pour le rapport A9/A8.

À titre illustratif, un mode de commande préférentiel des volets convergents va d'abord être décrit dans ce qui suit.

Selon ce mode de réalisation préférentiel, les volets convergents 30 commandés comprennent chacun un levier 80 solidaire du panneau 31 du volet. Un tel levier 80 s'étend bien entendu dans une direction d'éloignement de l'axe longitudinal 11, à partir du panneau 31 ou, dans l'exemple illustré, à partir d'une structure de rigidification 81 agencée sur la face externe du panneau 31 et solidaire de ce dernier.

De manière analogue à ce qui est décrit ci-dessus, la partie arrière de turboréacteur comprend des moyens moteurs comprenant une partie mobile déplaçable axialement sur commande par rapport à la structure statorique amont 38. À titre illustratif, les moyens moteurs sont, ici encore, constitués de vérins 56, et l'ensemble des tiges 56B des vérins constituent ladite partie mobile.

Afin de permettre que la partie mobile des moyens moteurs agisse sur le levier 80 d'au moins l'un des volets convergents 30 commandés, ledit levier 80 est disposé axialement entre une paroi d'appui amont 90 et une paroi d'appui aval 92, qui sont rigidement solidaires de la partie mobile des moyens moteurs, de sorte que le levier 80 soit libre de se mouvoir par rapport aux parois d'appui amont 90 et aval 92 au moins selon la direction radiale R par rapport à l'axe longitudinal 11.

De cette manière, lors d'un déplacement vers l'aval de la partie mobile des moyens moteurs (constituée des tiges 56B), la paroi d'appui amont 90 pousse le levier 80 vers l'aval et provoque ainsi un pivotement du volet convergent 30 selon le premier axe d'articulation A1 correspondant, conduisant à rapprocher de l'axe longitudinal 11 l'extrémité aval 46 du volet.

Inversement, lors d'un déplacement vers l'amont de la partie mobile des moyens moteurs, au moins si le turboréacteur est à l'arrêt, la paroi d'appui aval 92 pousse le levier 80 vers l'amont et provoque ainsi un pivotement du volet convergent 30 selon le premier axe d'articulation A1 correspondant, conduisant à éloigner de l'axe longitudinal 11 l'extrémité aval 46 du volet. Si le turboréacteur est en fonctionnement, il est possible que la poussée des gaz sur le volet convergent 30 suffise à provoquer le pivotement de ce dernier avant-même que la paroi d'appui aval 92 ne rentre en contact avec le levier 80. De ce fait, il est avantageusement prévu que la paroi d'appui amont 90 présente une rigidité accrue par comparaison avec la paroi d'appui aval 92. À cet effet, la paroi d'appui amont 90 peut être plus épaisse que la paroi d'appui aval 92, ou la paroi d'appui amont 90 peut présenter des nervures de rigidification la paroi d'appui aval 92 peut être dépourvue de telles nervures de rigidification.

Le levier 80 est pourvu d'un galet d'appui 96 de forme cylindrique de révolution, monté libre en rotation sur le levier 80 selon un axe 94 parallèle au premier axe d'articulation A1 correspondant, agencé entre les parois d'appui amont 90 et aval 92, de sorte que tout contact de l'une quelconque des parois d'appui amont 90 et aval 92 sur le levier 80 soit un contact cylindre/plan.

Ainsi, lors d'une manoeuvre de pivotement du volet convergent sous l'effet d'un effort de poussée appliqué au galet d'appui 96 par l'une des parois d'appui amont 90 et aval 92, le déplacement radial du galet d'appui 96 par rapport à la paroi d'appui concernée s'effectue moyennant un roulement du galet d'appui 96 sur ladite paroi d'appui.

L'espacement axial entre les parois d'appui amont 90 et aval 92 est supérieur au diamètre du galet d'appui 96, de sorte qu'un jeu axial existe en permanence entre le galet d'appui 96 et la paroi d'appui opposée à la paroi d'appui exerçant la poussée sur le galet d'appui 96.

Le galet d'appui 96 est avantageusement agencé à une extrémité libre du levier 80, de manière à maximiser le bras de levier exercé par les parois d'appui amont 90 et aval 92 sur le volet convergent 30 concerné.

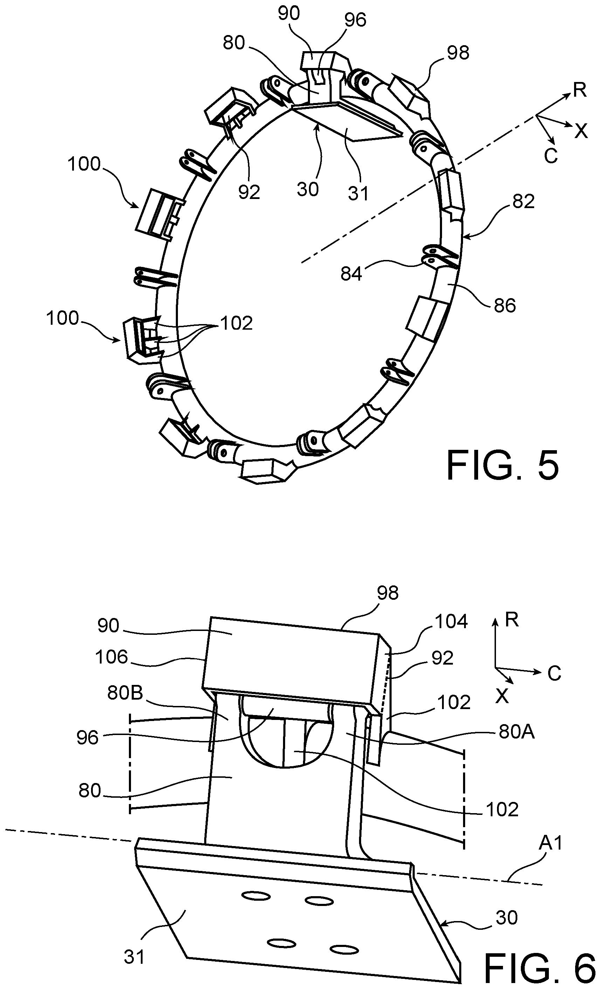

Ainsi, le galet d'appui 96 est par exemple monté sur un axe porté par deux bras latéraux 80A, 80B formant une fourche terminale du levier 80 (figure 5).

Par ailleurs, l'une des parois d'appui, en l'occurrence la paroi d'appui aval 92, est reliée à la partie mobile des moyens moteurs par l'intermédiaire de l'autre des parois d'appui, en l'occurrence la paroi d'appui amont 90.

À cet effet, une paroi externe de liaison 98 relie entre elles des extrémités radialement externes respectives des parois d'appui amont 90 et aval 92.

La description qui précède, concernant la manoeuvre du levier de l'un des volets convergents commandés, est de préférence également valable pour les autres volets convergents commandés.

Ainsi, dans le mode de réalisation illustré, la paroi d'appui amont 90 disposée en regard de chaque levier 80 est espacée circonférentiellement de parois d'appui amont 90 disposées en regard des deux leviers 80 les plus proches du levier considéré, et la paroi d'appui aval 92 disposée en regard de chaque levier 80 est espacée circonférentiellement des parois d'appui aval 92 disposées en regard des deux leviers 80 les plus proches du levier considéré (figure 5). Les parois d'appui amont 90 et aval 92 forment ainsi une rangée annulaire de dispositifs d'appui 100 espacés les uns des autres, chaque dispositif d'appui 100 comprenant une paire correspondante de parois d'appui comprenant l'une des parois d'appui amont 90 et l'une des parois d'appui aval 92.

La partie arrière de turboréacteur comprend en outre un anneau de synchronisation 82 agencé autour de l'ensemble des volets convergents 30 ou, en variante, agencé un peu plus en amont autour de la structure statorique amont 38, et par lequel chacun des dispositifs d'appui 100 est relié à la partie mobile des moyens moteurs, c'est-à-dire à l'ensemble des tiges 56B des vérins 56.

En particulier, la partie mobile des moyens moteurs est reliée à l'anneau de synchronisation 82 de manière à pouvoir déplacer ce dernier en translation selon l'axe longitudinal 11. À cet effet, les tiges 56B des vérins 56 sont articulées à des premières chapes 84 de l'anneau de synchronisation 82. De telles premières chapes 84 sont formées en saillie à partir d'un corps principal 86, par exemple de forme torique, de l'anneau de synchronisation 82. Les premières chapes 84 s'étendent par exemple vers l'amont à partir du corps principal 86.

Il est à noter que le corps principal 86 de l'anneau de synchronisation peut présenter une forme plus complexe, comportant par exemple une alternance de parties en saillie radialement vers l'intérieur et de parties en saillie radialement vers l'extérieur et/ou une alternance de parties en saillie vers l'amont et de parties en saillie vers l'aval. Dans tous les cas, le corps principal 86 de l'anneau de synchronisation s'étend tout autour de l'axe longitudinal 11 du turboréacteur et présente ainsi une forme globalement annulaire.

Chacun des dispositifs d'appui 100 est relié à l'anneau de synchronisation 82, par exemple au moyen de trois bras 102 espacés circonférentiellement les uns des autres et raccordant chacun l'anneau de synchronisation 82 à la paroi d'appui aval 92.

Les dispositifs d'appui constituent un exemple de moyens d'actionnement par lesquels l'anneau de synchronisation 82 agit sur les volets convergents 30 commandés, pour commander une variation géométrique de la tuyère.

Dans l'exemple illustré, au sein de chaque dispositif d'appui 100, dont l'un est visible sur la figure 6, une première paroi latérale de liaison 104 relie entre elles des premières extrémités circonférentielles respectives des parois d'appui amont 90 et aval 92, et une seconde paroi latérale de liaison 106 relie entre elles des secondes extrémités circonférentielles respectives des parois d'appui amont 90 et aval 92, opposées aux premières extrémités circonférentielles. Les première et seconde parois latérales de liaison 104, 106 permettent ainsi de relier la paroi d'appui amont 90 à la paroi d'appui aval 92 et donc à l'anneau de synchronisation 82, et par l'intermédiaire de ce dernier, à la partie mobile des moyens moteurs.

En fonctionnement, un déploiement de la tige 56B de chaque vérin 56, ou plus généralement un déploiement vers l'aval de la partie mobile des moyens moteurs, provoque un déplacement vers l'aval de l'anneau de synchronisation 82, qui entraîne vers l'aval chaque paroi d'appui amont 90 et aval 92. Chaque paroi d'appui amont 90 est ainsi amenée au contact du galet d'appui 96 du levier 80 correspondant. Chaque paroi d'appui amont 90 pousse alors le galet d'appui 96, et donc le levier 80, vers l'aval, et provoque le pivotement du volet correspondant en direction de l'axe longitudinal 11, ce qui accroît la convergence des volets convergents 30. Le galet d'appui 96 roule sur la paroi d'appui amont 90 au cours du pivotement du volet, un tel roulement étant permis du fait du jeu existant entre le galet 96 et l'autre paroi d'appui, en l'occurrence la paroi d'appui aval 92.

À l'inverse, une rétraction de la tige 56B de chaque vérin 56, ou plus généralement une rétraction vers l'amont de la partie mobile des moyens moteurs, provoque un déplacement vers l'amont de l'anneau de synchronisation 82, qui entraîne vers l'amont chaque paroi d'appui amont 90 et aval 92. Si le turboréacteur est à l'arrêt, chaque paroi d'appui aval 92 est ainsi amenée au contact du galet d'appui 96 du levier 80 correspondant. Chaque paroi d'appui aval 92 pousse alors le galet d'appui 96, et donc le levier 80, vers l'amont, et provoque le pivotement du volet correspondant en direction opposée à l'axe longitudinal 11, ce qui réduit la convergence des volets convergents 30. Le galet d'appui 96 roule sur la paroi d'appui aval 92 au cours du pivotement du volet, un tel roulement étant là encore permis du fait du jeu existant entre le galet 96 et l'autre paroi d'appui, en l'occurrence la paroi d'appui amont 90. En revanche, si le turboréacteur est en fonctionnement, il est possible que la poussée des gaz sur le volet convergent 30 suffise à provoquer le pivotement de ce dernier avant-même que la paroi d'appui aval 92 ne rentre en contact avec le levier 80.

Les vérins 56 travaillent ainsi dans le sens du déploiement de leur tige 56B lors d'une manoeuvre d'accroissement de la convergence des volets convergents, ce qui est avantageux du point de vue mécanique. En effet, au moins dans le cas préférentiel dans lequel les vérins 56 sont des vérins hydrauliques, le déploiement de la tige d'un tel vérin résulte d'une pression hydraulique exercée sur la totalité de la surface du piston du vérin, tandis que la rétraction de la tige résulte d'une pression hydraulique exercée sur la surface du piston diminuée de la section de la tige. Pour cette raison au moins, le déploiement de la tige offre en général une puissance accrue par rapport à la rétraction de la tige.

De plus, l'ensemble des éléments participant à la commande des volets internes, constitué des leviers 80, des parois d'appui amont 90 et aval 92, et des moyens reliant ces dernières à la partie mobile des moyens moteurs, peut ainsi présenter un encombrement et une masse limités.

Par ailleurs, le levier 80 de chacun des volets convergents 30 commandés est avantageusement agencé à une extrémité amont du volet, de manière là encore à limiter au mieux l'encombrement et la masse du système de commande des volets.

Dans un tel cas, il est avantageux que l'anneau de synchronisation 82 soit disposé en aval du levier 80 de chacun des volets convergents 30 commandés.

Il est à noter que les corps 56A des vérins 56 peuvent être fixés rigidement sur la structure statorique 38, de la même manière que dans l'exemple connu illustré sur la figure 2 et décrit ci-dessus.

Dans des modes de réalisation alternatifs, les parois d'appui amont 90 peuvent être reliées les unes aux autres de manière à constituer une structure d'appui amont unitaire s'étendant sur 360 degrés. De manière analogue, les parois d'appui aval 92 peuvent être reliées les unes aux autres de manière à constituer une structure d'appui aval unitaire s'étendant sur 360 degrés.

De telles structures d'appui peuvent être directement intégrées au corps 86 de l'anneau de synchronisation 82.

Les moyens mis en oeuvre pour asservir les positions des volets divergents 32 à celles des volets convergents 30 vont être décrits dans ce qui suit.

Pour chaque volet divergent 32, ces moyens comprennent une première bielle 120 ayant une première partie d'extrémité 120A articulée au volet convergent 30 correspondant et une seconde partie d'extrémité 120B opposée, une deuxième bielle 122 ayant une première partie d'extrémité 122A articulée au volet divergent 32 correspondant et une seconde partie d'extrémité 122B opposée, et une troisième bielle 124 ayant une première partie d'extrémité 124A articulée à l'anneau de synchronisation 82 et une seconde partie d'extrémité 124B opposée. De plus, la seconde partie d'extrémité 120B de la première bielle 120 est articulée à au moins l'une parmi la seconde partie d'extrémité 122B de la deuxième bielle 122 et la seconde partie d'extrémité 124B de la troisième bielle 124. Enfin, la seconde partie d'extrémité 124B de la troisième bielle 124 est articulée à la seconde partie d'extrémité 122B de la deuxième bielle 122.

Dans l'exemple illustré sur les figures 3 à 7, la seconde partie d'extrémité 120B de la première bielle 120 est articulée conjointement à la seconde partie d'extrémité 122B de la deuxième bielle 122 et à la seconde partie d'extrémité 124B de la troisième bielle 124, selon un axe d'articulation commun AC.

De plus, la première partie d'extrémité 120A de la première bielle 120 est articulée à la structure de rigidification 81 solidaire du panneau 31 du volet convergent, selon un troisième axe d'articulation A3 qui est avantageusement plus proche du premier axe d'articulation A1 que du deuxième axe d'articulation A2. Dans l'exemple illustré, le troisième axe d'articulation A3 est en outre plus proche d'une ligne médiane LM, située à mi-distance entre le premier axe A1 et le deuxième axe A2, que du premier axe A1. La première partie d'extrémité 122A de la deuxième bielle 122 est articulée à une chape 126 solidaire du panneau 33 du volet divergent, selon un quatrième axe d'articulation A4 qui est avantageusement situé sensiblement à mi-distance entre le deuxième axe d'articulation A2 et l'extrémité aval 79B du volet divergent. Enfin, la première partie d'extrémité 124A de la troisième bielle 124 est articulée à une deuxième chape 128 de l'anneau de synchronisation 82. De telles deuxièmes chapes 128 sont formées en saillie à partir du corps principal 86 de l'anneau de synchronisation 82 et s'étendent par exemple vers l'aval et radialement vers l'extérieur à partir du corps principal 86.

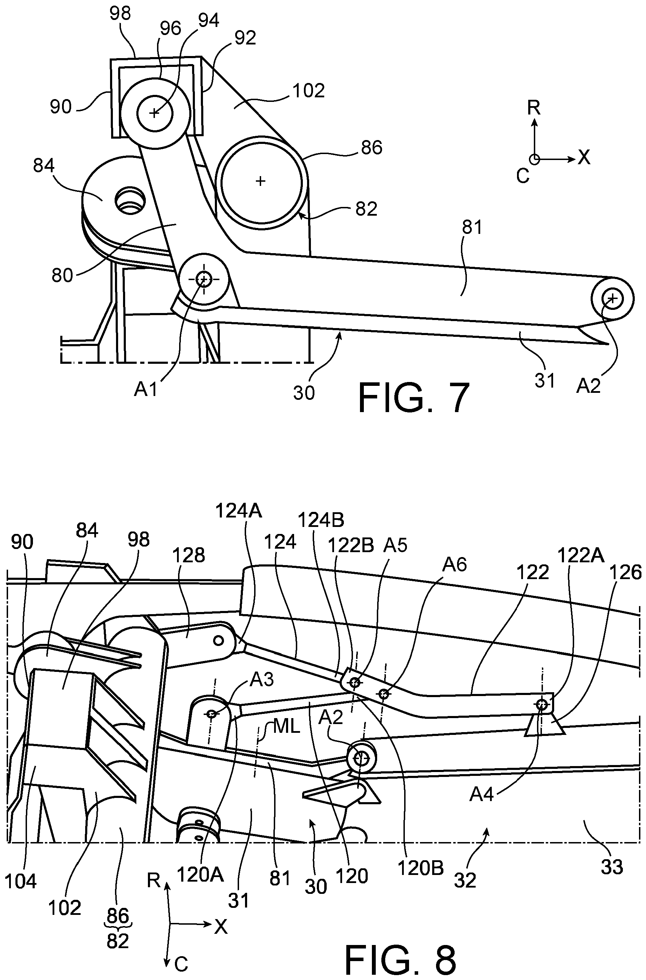

Dans la variante illustrée sur la figure 8, la seconde partie d'extrémité 124B de la troisième bielle 124 est articulée à la seconde partie d'extrémité 122B de la deuxième bielle 122 selon un cinquième axe d'articulation A5, et la seconde partie d'extrémité 120B de la première bielle 120 est articulée à la seconde partie d'extrémité 122B de la deuxième bielle 122 selon un sixième axe d'articulation A6 situé entre le cinquième axe d'articulation A5 et la première partie d'extrémité 122A de la deuxième bielle 122.

En fonctionnement, les premières, deuxièmes et troisièmes bielles 120, 122, 124 déterminent l'orientation des volets divergents 32 selon une loi univoque en fonction de l'orientation des volets convergents 30.

Ce mode d'asservissement des positions des volets divergents permet d'étendre la plage de valeur du rapport A9/A8. L'étendue de cette plage peut ainsi typiquement être portée à 0,35, voire davantage.

## Revendications

1. Partie arrière de turboréacteur, comprenant :
- une structure statorique amont (38) ;
- une tuyère convergente-divergente à géométrie variable (28) comprenant un ensemble de volets convergents (30) répartis autour d'un axe longitudinal (11) de la partie arrière de turboréacteur, comprenant chacun un panneau (31) destiné à canaliser un flux de gaz d'échappement (F4) au sein de la tuyère, et ayant chacun une extrémité amont (36) articulée sur la structure statorique amont, et comprenant en outre un ensemble de volets divergents (32) répartis autour de l'axe longitudinal (11), comprenant chacun un panneau (33) destiné à canaliser le flux de gaz d'échappement au sein de la tuyère, et ayant chacun une extrémité amont (44) articulée sur une extrémité aval (46) d'un volet convergent correspondant ;
- un anneau de synchronisation (82) agencé autour de l'ensemble de volets convergents (30) ou de la structure statorique amont (38) ;
- des moyens moteurs configurés pour déplacer l'anneau de synchronisation (82) en translation selon l'axe longitudinal (11), par rapport à la structure statorique amont (38) ;
- des moyens d'actionnement par lesquels l'anneau de synchronisation (82) agit sur certains au moins des volets convergents (30), dits volets convergents commandés, pour commander une variation géométrique de la tuyère ; et
- des moyens pour asservir les positions des volets divergents à celles des volets convergents, comprenant une première bielle (120) ayant une première partie d'extrémité (120A) articulée au volet convergent (30) correspondant et une seconde partie d'extrémité (120B) opposée, une deuxième bielle (122) ayant une première partie d'extrémité (122A) articulée au volet divergent (32) correspondant et une seconde partie d'extrémité (122B) opposée, et une troisième bielle (124) ayant une première partie d'extrémité (124A) articulée à l'anneau de synchronisation (82) et une seconde partie d'extrémité (124B) opposée ;
**caractérisée en ce que** la seconde partie d'extrémité (120B) de la première bielle (120) est articulée à au moins l'une parmi la seconde partie d'extrémité (122B) de la deuxième bielle (122) et la seconde partie d'extrémité (124B) de la troisième bielle (124), et
la seconde partie d'extrémité (124B) de la troisième bielle (124) est articulée à la seconde partie d'extrémité (122B) de la deuxième bielle (122).

2. Partie arrière de turboréacteur selon la revendication 1, dans laquelle la seconde partie d'extrémité (120B) de la première bielle (120) est articulée conjointement à la seconde partie d'extrémité (122B) de la deuxième bielle (122) et à la seconde partie d'extrémité (124B) de la troisième bielle (124), selon un axe d'articulation commun (AC).

3. Partie arrière de turboréacteur selon la revendication 1, dans laquelle la seconde partie d'extrémité (124B) de la troisième bielle (124) est articulée à la seconde partie d'extrémité (122B) de la deuxième bielle (122) selon un cinquième axe d'articulation (A5), et la seconde partie d'extrémité (120B) de la première bielle (120) est articulée à la seconde partie d'extrémité (122B) de la deuxième bielle (122) selon un sixième axe d'articulation (A6) situé entre le cinquième axe d'articulation (A5) et la première partie d'extrémité (122A) de la deuxième bielle (122).

4. Partie arrière de turboréacteur selon l'une quelconque des revendications 1 à 3, dans laquelle un rapport A9/A8, égal au quotient d'une section A9 de la tuyère au niveau d'une extrémité aval des volets divergents par une section A8 de la tuyère au niveau d'un col formé à une jonction entre les volets convergents et les volets divergents, varie dans une plage d'étendue supérieure à 0,35.

5. Turboréacteur pour aéronef, comprenant une partie arrière selon l'une quelconque des revendications 1 à 4.

## Patentansprüche

1. Hinterer Abschnitt eines Turbostrahltriebwerks, der Folgendes umfasst:
- eine stromaufwärts gelegene Statoranordnung (38);
- eine konvergent-divergente Düse mit variabler Geometrie (28), die einen Satz von konvergenten Klappen (30), die um eine Längsachse (11) des hinteren Abschnitts des Turbostrahltriebwerks herum verteilt sind, jeweils eine Platte (31) umfassen, die dazu bestimmt ist, einen Abgasstrom (F4) innerhalb der Düse zu kanalisieren, und jeweils ein stromaufwärts gelegenes Ende (36) aufweisen, das an der stromaufwärts gelegenen Statoranordnung angelenkt ist, und ferner einen Satz von divergenten Klappen (32) umfasst, die um die Längsachse (11) herum verteilt sind, jeweils eine Platte (33) umfassen, die dazu bestimmt ist, den Abgasstrom innerhalb der Düse zu kanalisieren, und jeweils ein stromaufwärts gelegenes Ende (44) aufweisen, das an einem stromabwärts gelegenen Ende (46) einer entsprechenden konvergenten Klappe angelenkt ist;
- einen Synchronisationsring (82), der um den Satz von konvergenten Klappen (30) oder die stromaufwärts gelegenen Statoranordnung (38) herum angeordnet ist;
- Antriebsmittel, die dazu konfiguriert sind, den Synchronisationsring (82) in Translationsrichtung entlang der Längsachse (11) im Verhältnis zur stromaufwärts gelegenen Statoranordnung (38) zu bewegen;
- Betätigungsmittel, mit denen der Synchronisationsring (82) auf mindestens einige der konvergenten Klappen (30), die sogenannten gesteuerten konvergenten Klappen, einwirkt, um eine geometrische Veränderung der Düse zu steuern; und
- Mittel zum Nachführen der Positionen der divergenten Klappen anhand derjenigen der konvergenten Klappen, umfassend eine erste Verbindungsstange (120), die einen ersten Endabschnitt (120A), der an der entsprechenden konvergenten Klappe (30) angelenkt ist, und einen gegenüberliegenden zweiten Endabschnitt (120B) aufweist, eine zweite Verbindungsstange (122), die einen ersten Endabschnitt (122A), der an der entsprechenden divergenten Klappe (32) angelenkt ist, und einen gegenüberliegenden zweiten Endabschnitt (122B) aufweist, und eine dritte Verbindungsstange (124), die einen ersten Endabschnitt (124A), der an dem Synchronisationsring (82) angelenkt ist, und einen gegenüberliegenden zweiten Endabschnitt (124B) aufweist;
**dadurch gekennzeichnet, dass** der zweite Endabschnitt (120B) der ersten Verbindungsstange (120) an mindestens einem von dem zweiten Endabschnitt (122B) der zweiten Verbindungstange (122) und dem zweiten Endabschnitt (124B) der dritten Verbindungsstange (124) angelenkt ist, und
der zweite Endabschnitt (124B) der dritten Verbindungsstange (124) an dem zweiten Endabschnitt (122B) der zweiten Verbindungsstange (122) angelenkt ist.

2. Hinterer Abschnitt eines Turbostrahltriebwerks nach Anspruch 1, wobei der zweite Endabschnitt (120B) der ersten Verbindungsstange (120) zeitgleich an dem zweiten Endabschnitt (122B) der zweiten Verbindungsstange (122) und an dem zweiten Endabschnitt (124B) der dritten Verbindungsstange (124) entlang einer gemeinsamen Gelenkachse (AC) angelenkt ist.

3. Hinterer Abschnitt eines Turbostrahltriebwerks nach Anspruch 1, wobei der zweite Endabschnitt (124B) der dritten Verbindungsstange (124) an dem zweiten Endabschnitt (122B) der zweiten Verbindungsstange (122) entlang einer fünften Gelenkachse (A5) angelenkt ist, und der zweite Endabschnitt (120B) der ersten Verbindungsstange (120) an dem zweiten Endabschnitt (122B) der zweiten Verbindungsstange (122) entlang einer sechsten Gelenkachse (A6), die sich zwischen der fünften Gelenkachse (A5) und dem ersten Endabschnitt (122A) der zweiten Verbindungsstange (122) befindet, angelenkt ist.

4. Hinterer Abschnitt eines Turbostrahltriebwerks nach einem der Ansprüche 1 bis 3, wobei ein Verhältnis von A9 zu A8, das gleich dem Quotienten eines Abschnitts A9 der Düse an einem stromabwärts gelegenen Ende der divergenten Klappen durch einen Abschnitt A8 der Düse an einem Hals ist, der an einer Verbindungsstelle zwischen den konvergenten Klappen und den divergenten Klappen gebildet wird, in einem Bereich von mehr als 0,35 variiert.

5. Turbostrahltriebwerk für ein Flugzeug, das einen hinteren Abschnitt nach einem der Ansprüche 1 bis 4 umfasst.

## Claims

1. A turbojet engine rear portion, comprising:
- an upstream stator structure (38);
- a convergent-divergent nozzle with a variable geometry (28) comprising a set of convergent flaps (30) distributed around a longitudinal axis (11) of the rear portion of the turbojet engine, each comprising a panel (31) intended to channel an exhaust gas flow (F4) within the nozzle, and each having an upstream end (36) hinged on the upstream stator structure, and further comprising a set of divergent flaps (32) distributed around the longitudinal axis (11), each comprising a panel (33) intended to channel the exhaust gas flow within the nozzle, and each having an upstream end (44) hinged on a downstream end (46) of a corresponding convergent flap;
- a synchronisation ring (82) arranged around the set of convergent flaps (30) or the upstream stator structure (38);
- drive means configured to move the synchronisation ring (82) in translation according to the longitudinal axis (11), relative to the upstream stator structure (38);
- actuating means by which the synchronisation ring (82) acts on at least some of the convergent flaps (30), called controlled convergent flaps, to control a geometric variation of the nozzle; and
- means for controlling the positions of the divergent flaps on the basis of those of the convergent flaps, comprising a first connecting rod (120) having a first end portion (120A) hinged to the corresponding convergent flap (30) and an opposite second end portion (120B), a second connecting rod (122) having a first end portion (122A) hinged to the corresponding divergent flap (32) and an opposite second end portion (122B), and a third connecting rod (124) having a first end portion (124A) hinged to the synchronisation ring (82) and an opposite second end portion (124B);
**characterized in that** the second end portion (120B) of the first connecting rod (120) is hinged to at least one amongst the second end portion (122B) of the second connecting rod (122) and the second end portion (124B) of the third connecting rod (124), and
the second end portion (124B) of the third connecting rod (124) is hinged to the second end portion (122B) of the second connecting rod (122).

2. The turbojet engine rear portion according to claim 1, wherein the second end portion (120B) of the first connecting rod (120) is hinged together to the second end portion (122B) of the second connecting rod (122) and to the second end portion (124B) of the third connecting rod (124), according to a common hinge axis (AC).

3. The turbojet engine rear portion according to claim 1, wherein the second end portion (124B) of the third connecting rod (124) is hinged to the second end portion (122B) of the second connecting rod (122) according to a fifth axis (A5), and the second end portion (120B) of the first connecting rod (120) is hinged to the second end portion (122B) of the second connecting rod (122) according to a sixth hinge axis (A6) located between the fifth hinge axis (A5) and the first end portion (122A) of the second connecting rod (122).

4. The turbojet engine rear portion according to any one of claims 1 to 3, wherein an A9/A8 ratio, equal to the quotient of a section A9 of the nozzle at a downstream end of the divergent flaps by a section A8 of the nozzle at a neck formed at a junction between the convergent flaps and the divergent flaps, varies within a range wider than 0.35.

5. A turbojet engine for an aircraft, comprising a rear portion according to any one of claims 1 to 4.
